# EUROPÄISCHE PATENTANMELDUNG

(11) **EP 1 762 993 A1**
(43) Veröffentlichungstag der Anmeldung: **14.03.2007**
(21) Anmeldenummer: 06021451.7
(22) Anmeldetag: 13.12.2002
(51) Int. Cl.: G07F 17/42, G07B 15/00, G06Q 30/00

(54) **Einrichtung und Verfahren zum Vorverkauf und zur Ausgabe von Tickets mittels Automaten**

(62) Teilanmeldung aus: 02782601.5
(71) Anmelder: IPAG Inter Personal AG, 3001 Bern (CH)
(72) Erfinder: Halbherr, Peter, 3286 Muntelier (CH); Lent, Bogdan, 3027 Bern (CH)
(74) Vertreter: Rüfenacht, Philipp Michael

(57) **Zusammenfassung**

Das Verfahren und die Einrichtung zum Vorverkauf und zur Ausgabe von Eintritts- oder Parkkarten, Flug- und/oder Fahrscheinen mittels Automaten basiert auf der örtlichen, systemmässigen und zeitlichen Trennung des Wahlvorgangs (Bestellung, Annahme und EDV-Abspeicherung), von der Ausgabe der Eintritts- oder Parkkarten, Flug- und/oder Fahrscheine und der Abrechnung. Die über ein Telefon (2) oder Internet aufgegebenen Bestellungen werden durch die Bestellungsannahmestelle (8) in die zentrale EDV (10) abgespeichert. Zur Ausgabe der vorbestellten Eintrittskarten, Flug- und/oder Fahrscheine dienen einfachste, mit der zentralen EDV (10) via Datenleitungen (13, 16, 30) verbundene und in meistfrequentierten Orten aufgestellte Ausgabeautomaten. Der Benutzer identifiziert sich mittels einer elektronisch lesbaren Karte an einem beliebigen Automaten. Die Einrichtung findet darauf die Vorbestellung, initiiert den sofortigen Ausdruck und rechnet bargeldlos direkt (Leistungserbringer 15) oder indirekt (Drittanbieterkarten 31) ab.

## Beschreibung

### Technisches Gebiet

Die Erfindung betrifft eine Einrichtung mit einer zentralen elektronischen Datenverarbeitungsanlage, in welcher eine zentrale Bestellungsdatenbank enthalten ist, und mit mindestens einem Ticketausgabeautomaten, der einen Drucker hat und der mit der zentralen elektronischen Datenverarbeitungsanlage zwecks einem von einem Bestellvorgang und einem Abrechnungsvorgang örtlich und zeitlich getrennten Bezug des Tickets im Online-Betrieb verbunden ist, wobei der Ticketausgabeautomat Mittel zum Erfassen einer Benutzeridentifikation aufweist. Die Erfindung betrifft weiter einen Ticketausgabeautomaten für eine solche Einrichtung und ein Verfahren zum Betrieb einer solchen Einrichtung.

### Stand der Technik

Bisher werden die Eintrittskarten, Flug- und Fahrscheine am Schalter oder an herkömmlichen Automaten verkauft.

Das Verkaufspersonal am Schalter bietet optimale Unterstützung in der Wahl der gewünschten Leistung. Nachteilig sind die damit verbundenen hohen Personalkosten.

Der herkömmliche Automat soll das Personal teilweise entlasten oder ersetzen. Der Benutzer ist nun aufgefordert, sich selbst in der Tarifvielfalt mittels Tasten, berührungsempfindlicher Bildschirme und Anzeigen zurechtzufinden.

In herkömmlichen Automaten werden alle zum Verkauf notwendigen Tarifdaten in einer allgemeinen Form abgespeichert. Das fordert einen entsprechenden Speicherplatz und Prozessorleistung. Ferner werden weitere Speicher und Prozessorkapazitäten zur Ansteuerung der ausgebauten (z.B. berührungsempfindlicher Bildschirm) Mensch-Maschinen-Schnittstelle notwendig. Darüber hinaus ist anspruchsvolle Elektronik wie auch die Mechanik zum Handling von Bargeld und für die gesicherte Abspeicherung aller Verkaufsvorgänge und der Abrechnung nach mehreren Arten erforderlich.

Aus der US 3.622.995 (Burroughs-Corporation) ist ein System zur Reservation und späteren Ausgabe von Tickets bekannt. Die Reservation wird telefonisch bei einem Reservationsbüro durchgeführt. Der automatische Ticket-Ausgabeautomat steht z.B. an den Terminals des Flughafens. Der Kunde gibt am Ticket-Ausgabeautomat seine Kreditkarte ein und die Daten der Reservation, wonach das Ticket ausgegeben wird.

Die US 3.445.633 (Defense Electronics) beschreibt einen Flugticket-Ausgabeautomaten. Es wird davon ausgegangen, dass der Passagier seinen Flug bereits reserviert hat und dass auf einer Kreditkarte die allgemeinen Informationen (Name des Inhabers, Kreditkarteninstitut etc.) in maschinenlesbarer Form abgespeichert sind bzw. dass der Benutzer diese Daten in das Terminal eingibt. Auf dem Bildschirm sind die aktuellen Standorte der abgehenden Flüge angezeigt. Jedem Flug ist eine Taste zugeordnet. Der Benutzer schiebt dann seine Kreditkarte ein und kann den von ihm reservierten Flug durch Drücken der zugeordneten Taste bestätigen. Wird ein Flug ausgewählt, für den keine Reservation besteht, wird der Vorgang abgebrochen und die Karte ausgeworfen. Ist der richtige Flug ausgewählt, können auch noch Gepäckstück-Schecks ausgegeben werden.

Die US 4.449.186 (Cubic Western Data) beschreibt ebenfalls einen Flugticket-Ausgabeautomaten, bei welchem die Reservation schon erfolgt ist, wenn der Passagier am Flughafen-Terminal mit seiner Kreditkarte das Ticket auslöst. Nach dem Einschieben der Kreditkarte muss der Passagier die Reservationsnummer eingeben, welche den reservierten Flug eindeutig identifiziert. Der identifizierte Flug wird dann auf dem Bildschirm angezeigt und muss bestätigt werden.

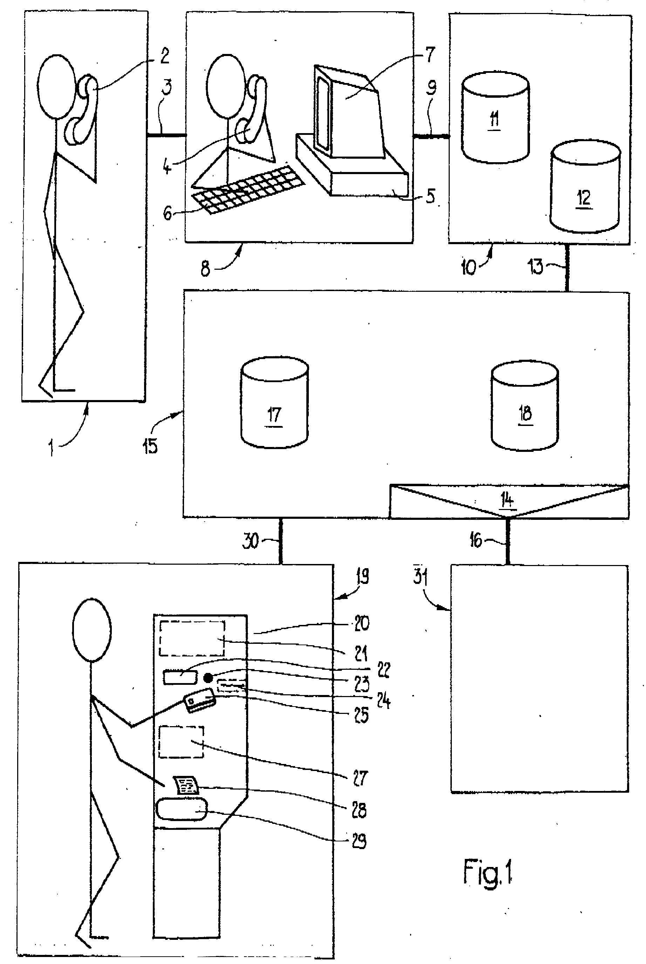

Die DE 32 21 235 A1 (Tokyo Shibaoura) offenbart ein System mit einer grösseren Anzahl von unterschiedlichen Ein- und Ausgabegeräten (Fig. 1). Das System umfasst Schalterkartenverkaufsmaschinen, welche für die Reservation verwendet und zum Beispiel von einem Beamten bedient werden. Es ist deshalb möglich, die Reservation telefonisch zu machen. Die genannte Maschine soll alle Funktionen ausführen können, die im System möglich sind. Zusätzlich gibt es auch einen Kartenverkaufsautomaten, welcher vom Kunden bedienbar ist und welcher für die Ausgabe von reservierten Karten dient. Reservierte Platzkarten werden auf Eingabe der Reservierungsnummer ausgegeben. Die Bezahlung mit Bargeld oder Kreditkarte erfolgt am Automaten.

Die Ticketausgabeautomaten im Stand der Technik, welche vorher bestellte Karten ausgeben, verlangen vom Benutzer nebst einer Identifizierung durch z. B. eine Kredit- oder Kundenkarte eine zusätzliche Autorisierung, z. B. durch Eingabe einer Reservierungsnummer oder durch erneutes Anwählen des korrekten vorbestellten Produkts. Dabei besteht die Gefahr, dass der Benutzer trotz erfolgter Bestellung sein Produkt nicht beziehen kann, weil er z. B. die Reservierungsnummer vergessen hat. Ausserdem wird durch die zusätzliche Authentifizierung und die Identifikation des gebuchten Flugs auf einem Bildschirm bei den bekannten Automaten der Zeitbedarf für die Ausgabe einer vorbestellten Karte erheblich vergrössert, besonders wenn der erfolgreichen Ausgabe mehrere Fehlversuche vorangehen (falsche Reservierungsnummer, Vertippen, andere Bedienungsfehler).

### Darstellung der Erfindung

Aufgabe der Erfindung ist es, eine Einrichtung und ein Verfahren zum Vorverkauf und zur Ausgabe von Tickets mittels Automaten zu schaffen, welche sehr einfach zu bedienen sind und eine Ausgabe der Tickets innert kürzester Zeit erlauben.

Die Lösung der Aufgabe ist in Bezug auf die Einrichtung durch die Merkmale des Anspruchs 1 definiert. Gemäss der Erfindung umfasst die Einrichtung eine zentrale elektronische Datenverarbeitungsanlage (EDV), in welcher eine zentrale Bestellungsdatenbank enthalten ist. Damit im Online-Betrieb verbunden ist mindestens ein Ticketausgabeautomat mit einem Drucker zum Bezug des Tickets. Die Bestellung des gewünschten Tickets und die Abrechnung erfolgt örtlich und zeitlich getrennt vom späteren Bezug. Der Ticketausgabeautomat umfasst Mittel zum Erfassen einer Benutzeridentifikation und ist so gesteuert, dass nach der Erfassung der Benutzeridentifikation die in der zentralen Bestellungsdatenbank zu dieser Identifikation vorhandenen Vorbestellungen an den Ticketausgabeautomaten übermittelt und dort angezeigt werden. Der Benutzer kann sodann die gewünschte Vorbestellung auswählen und/oder bestätigen, worauf das Ticket ausgedruckt und ausgegeben wird.

Die erfindungsgemässe Einrichtung verschiebt die Bestellung des Tickets auf einen früheren und die Abrechnung bzw. Bezahlung auf einen späteren Zeitpunkt. Durch die Trennung der Bestellung und der Abrechnung vom Bezug des Tickets wird ein Zeitdruck vermieden, der entstehen kann, wenn im letztmöglichen Moment noch ein Ticket durch einen komplizierten Auswahl- und Bezahlungsvorgang erhalten werden muss. Die Bestellung und die Abrechnung können zudem z. B. telefonisch und damit personenunterstützt erfolgen, oder aber über einen EDV-gestützten Vorgang, via Mobilfunknetze oder das Internet.

Tickets umfassen z. B. Fahrkarten für öffentliche Verkehrsmittel, Eintrittskarten für kulturelle Veranstaltungen wie Konzerte, Theater, Musik- und Sportveranstaltungen, Kinos etc., Parkkarten für Parkplätze oder Parkhäuser usw.

Der eigentliche Bezug des Tickets erfolgt typischerweise dort, wo die Leistung auch beansprucht werden wird, also z. B. am Bahnhof, im Kino oder Theater, im Parkhaus etc. Der Bezugsvorgang besteht einfach darin, dass sich der Benutzer identifiziert, bei Vorliegen mehrerer Vorbestellungen das gewünschte Ticket auswählt bzw. bei Vorliegen einer einzigen Vorbestellung die Ausgabe bestätigt, wonach das Ticket sofort ausgedruckt wird: Die Einfachheit dieses Vorgangs führt dazu, dass ein Benutzer nicht veranlasst ist, sich länger als nötig mit dem Automaten zu beschäftigen; zusammen mit der Kürze des Vorgangs selbst führt dies zu einer grossen Ausgabekapazität des erfindungsgemässen Automaten.

Trotz der Einfachheit des Bezugsvorgangs können mit der erfindungsgemässen Einrichtung Tickets für eine Vielzahl von verschiedenen Anbietern oder Diensten ausgegeben werden, wobei alle Anbieter oder Dienste auf dieselbe zentrale Bestellungsdatenbank zugreifen. Derselbe Ticketausgabeautomat oder Ticketausgabeautomaten desselben Typs können also Tickets für unterschiedliche Leistungen, wie Fahrkarten, Eintrittskarten oder Parkkarten, ausgeben, Die Bestellung und die Abrechnung können gemeinsam für mehrere oder alle Anbieter bzw. Dienste oder getrennt für jeden Anbieter bzw. Dienst erfolgen.

Die Ticketausgabeautomaten speichern zudem keine Tarife, haben keinen Bedarf für eine anspruchsvolle Mensch-Maschinen-Schnittstelle, und weil keine Zahlung am Automaten erfolgt, enthalten die erfindungsgemässen Automaten auch keine Verkaufsdateien und müssen keine Abrechnungen ausführen. Die Automaten sind nur im Online-Betrieb funktionsfähig. All das führt dazu, dass die erfindungsgemässen Ticketausgabeautomaten einfach und damit preisgünstig als schlankes Peripheriegerät aufgebaut sind; sie lassen sich auch bei kleinem Raumangebot einsetzen, bieten wenig Angriffsfläche für Vandalenakte und sind für "Automatenknacker" uninteressant, weil sie kein Bargeld annehmen.

Mit Vorteil weist der Ticketausgabeautomat der erfindungsgemässen Einrichtung als Mittel zum Erfassen der Benutzeridentifikation einen Kartenleser auf. Kreditkarten und Kundenkarten verschiedenster Unternehmungen sind heute weit verbreitet. Sie tragen in der Regel maschinenlesbare Informationen (z. B. auf einem Magnetstreifen oder auf einem Chip), welche die Identifikation des Kartenbesitzers erlauben. Der Lesevorgang dieser Informationen durch einen Kartenleser ist sehr schnell.

Anstatt mit einer Kredit- oder Kundenkarte kann ein Benutzer der erfindungsgemässen Einrichtung sich am Ticketausgabeautomaten z. B. auch mit seinem Mobiltelefon identifizieren, z. B. indem er eine bestimmte, am Automaten angegebene Nummer anruft oder an eine bestimmte Nummer eine Textmitteilung (SMS) schickt. Einige Mobiltelefone bieten zudem bereits heute die Möglichkeit, auf öffentliche Datennetze (z. B. das Internet) zuzugreifen, z. B. mittels des sog. Wireless Application Protocol (WAP), was ebenfalls eine identifikation des Benutzers gegenüber dem Automaten erlaubt.

Weiter gibt es spezielle Geräte, z. B. in Form einer Armbanduhr oder herkömmliche "Badges", welche die berührungsfreie Identifizierung des Trägers erlauben. Es kann auch vorgesehen sein, dass sich der Benutzer auf diese Art und Weise beim Ticketausgabeautomaten identifiziert.

Schliesslich ist auch denkbar, dass biometrische Merkmale (Iris des Auges, Fingerabdrücke, Gesichtserkennung etc.) direkt zur Identifikation beigezogen werden, indem der Ticketausgabeautomat entsprechende Sensoren umfasst und die erfassten Merkmale in der zentralen EDV mit gespeicherten Daten abgeglichen werden.

Mit Vorteil kann sich der Benutzer gegenüber den Mitteln zum Erfassen einer Benutzeridentifikation mittels eines Mobiltelefons identifizieren. In der Regel ist jedem Mobiltelefon eine Rufnummer (oder eine andere Identifikation) zugeordnet, welche der Gegenstation über das Mobilnetz übermittelt wird, Diese Nummer ist hinreichend für die Identifikation des Benutzers des Mobiltelefons gegenüber der erfindungsgemässen Einrichtung. Die zentrale elektronische Datenverarbeitungsanlage umfasst z. B. Mittel zum Empfangen von Anrufen, und im einfachsten Fall reicht ein Anruf an eine am Automaten angegebene Rufnummer zur Identifikation des Benutzers gegenüber dem Automaten aus, ohne dass eine Verbindung zu Stande kommen muss. Zusätzliche Möglichkeiten ergeben sich, wenn eine Textmitteilung (z. B. SMS) an den Automaten gesandt wird oder wenn die Identifikation mittels eines Datennetzes erfolgt, auf welches über ein Mobiltelefon zugegriffen werden kann (z. B. das Internet mittels WAP).

Vorzugsweise kann sich der Benutzer auch mittels eines berührungslosen Signalgebers gegenüber den Mitteln zum Erfassen einer Benutzeridentifikation identifizieren. Ein solcher Signalgeber übermittelt primär einen Identifikationscode, welcher seinen Träger gegenüber einem Empfänger identifiziert. Er kann z. B. in einer Armbanduhr, einem Pager oder einem anderen elektronischen Gerät integriert sein oder eine gesonderte Einheit bilden. Die Kommunikation erfolgt direkt mit dem im jeweiligen Ticketausgabeautomaten integrierten Empfänger, z. B. per Infrarot-Verbindung, Funk oder Induktion.

Mit Vorteil ist der Ticketausgabeautomat lediglich zur Ausgabe von Vorbestellungen ausgebildet. Ein solcher Automat ist so einfach wie möglich, mit einem Minimum an Bedienungselementen, aufgebaut und erlaubt - bzw. sogar erzwingt - eine schnelle Transaktion bei der Ticketausgabe.

Damit der Komfort des Ticketausgabeautomaten der erfindungsgemässen Einrichtung verbessert und die Bezugszeit weiter minimiert wird, ist die Auswahl bzw. die Reihenfolge der am Automaten angezeigten Vorbestellungen mit Vorzug durch die Bezugszeit des Tickets oder den Aufstellungsort des Ticketausgabeautomaten bestimmt. Der Automat kann z. B. selektiv nur diejenigen Vorbestellungen anzeigen, welche am Bezugsort eingesetzt werden können, d.h. zum Beispiel nur Zugfahrkarten mit dem entsprechenden Abgangsort oder nur Kinokarten für den betreffenden Tag, wenn der Automat in einem Kino eingesetzt ist. Dabei ist es möglich, dass der Ausgabeautomat die bevorzugten Vorbestellungen lediglich prioritär behandelt, d.h. zuerst anzeigt, - oder aber er kann ausschliesslich die passenden Vorbestellungen ausgeben und die restlichen unterdrücken. Die Wahl zwischen diesen beiden Möglichkeiten kann durch den Benutzer über die zentrale EDV geschehen - z. B. im Zusammenhang mit der Vorbestellung - oder sie wird für den Automaten fest voreingestellt. Ein Automat kann selektiv auch nur die Tickets für einen oder mehrere bestimmte Anbieter oder Dienste ausgeben oder diese prioritär anzeigen.

Ein Ticketausgabeautomat für die erfindungsgemässe Einrichtung umfasst Mittel für die Online-Verbindung mit einer zentralen elektronischen Datenverarbeitungsanlage (EDV), Mittel zum Erfassen einer Benutzeridentifikation, Mittel zum Anzeigen von Vorbestellungen allein aufgrund der erfassten Benutzeridentifikation, ein Bedienungselement zum Bestätigen und/oder Auswählen einer bestimmten Vorbestellung und einen Drucker zum Ausgeben des Tickets zur ausgewählten Vorbestellung.

Die Mittel zur Online-Verbindung umfassen z. B. ein Terminal, welches via Kabelleitung oder Mobilfunk mit dem Internet verbunden ist. Die zentrale EDV ist in diesem Fall ebenfalls an das Internet angebunden. Alternativ dazu können systemspezifische, drahtlose oder kabelgebundene Verbindungen vorgesehen werden.

Als Mittel zum Erfassen einer Benutzeridentifikation können z. B. ein Kartenleser, ein Mobilfunkempfänger, ein Detektor für spezielle Geräte zur Identifizierung oder ein Sensor für biometrische Daten vorgesehen sein.

Zum Anzeigen der Vorbestellungen sind u. a. LED- oder LCD-Anzeigen, Plasmabildschirme, Kathodenstrahlröhren oder "elektronisches Papier" geeignet. Falls der Ausgabevorgang mittels Identifikation durch ein Mobiltelefon ausgelöst wird, kann die Anzeige auch über den Bildschirm des Mobiltelefons erfolgen, z. B. mittels des Standards "Wireless Application Protocol" (WAP).

Eine vorteilhafte und besonders einfache Ausführung des erfindungsgemässen Ticketausgabeautomaten weist lediglich eine einzige OK-Taste für die Auswahl bzw. Bestätigung einer Vorbestellung auf. Dadurch wird die Benutzerführung so einfach wie irgend möglich gestaltet. Falls ein Auswahlvorgang nötig ist, können die einzelnen Optionen z. B. je während einer gewissen Zeitspanne angezeigt werden oder der Benutzer kann durch mehrmaliges Drücken der Taste innert einer gewissen Zeit seine Auswahl tätigen.

Falls kompliziertere Auswahlvorgänge (z. B. aus einer grösseren Zahl von Vorbestellungen) zu erwarten sind, weist ein erfindungsgemässer Ticketausgabeautomat zusätzliche Bedienungselemente auf, z. B. eine Vorwärts- und eine Rückwärtstaste zum schnellen Anwählen einer Vorbestellung und/oder eine Korrekturtaste (Cancel) zum Widerrufen einer Auswahl. Die Bedienungselemente können auch als berührungsempfindliche Anzeige (Touchscreen) oder z. B. mit einer Rollkugel (Trackball) realisiert werden.

Ein Verfahren zum Betrieb einer erfindungsgemässen Einrichtung zur Erfassung von Bestellungen in einer zentralen Bestellungsdatenbank und zur örtlich und zeitlich getrennten Ausgabe von Tickets umfasst folgende Schritte: Die Entgegennahme von Bestellungsdaten in einem Terminal, welches mit einer zentralen elektronischen Datenverarbeitungsanlage (EDV) verbunden ist, das Abspeichern der Bestellungsdaten in der zentralen Bestellungsdatenbank, zu einem späteren Zeitpunkt die Entgegennahme einer Benutzeridentifikation an einem örtlich von der zentralen EDV getrennten Ticketausgabeautomaten; das Übermitteln der Benutzeridentifikation an die zentrale EDV und im Gegenzug das Übermitteln von zur Benutzeridentifikation vorhandenen Vorbestellungen an den Ticketausgabeautomaten; das Anzeigen der Vorbestellungen am Ticketausgabeautomaten; das Entgegennehmen einer Auswahl oder Bestätigung einer Vorbestellung und schliesslich das Ausdrucken eines Tickets zu der vom Benutzer ausgewählten oder bestätigten Vorbestellung.

Mit Vorteil werden die Vorbestellungsdaten zusammen mit Angaben zur Benutzeridentifikation zentral abgelegt und können von einem beliebigen an das System angeschlossenen Ticketausgabeautomaten allein aufgrund einer Identifikation mittels einer Karte im Online-Betrieb abgerufen werden. Die Abrechnung über den Bezug erfolgt nach Mitteilung der abgeschlossenen Ausgabe durch den Ticketausgabeautomaten in der zentralen EDV, einer EDV-Anlage des Leistungsanbieters und/oder bei einem Clearing Institut getrennt und ohne Auflagen.

Vorzugsweise können die Bestellungsdaten eine Bestellung umfassen, die erst nach Ablauf einer vorbestimmten Frist oder nach einem Widerruf durch den Benutzer aus der zentralen Datenbank gelöscht werden. Eine solche Vorbestellung kann am Ticketausgabeautomaten beliebig oft abgerufen werden. Sie hat also Abonnementscharakter. Gegenüber einem üblichen Abonnement oder einer Karte, die z. B. zu mehreren Bahnfahrten oder Kinobesuchen berechtigt, bietet diese Form der Bestellung den Vorteil, dass der Benutzer keine zusätzlichen Abonnements oder Karten mit sich tragen muss. Die Anzahl der Fahrten bzw. Bezüge ist zudem weder nach unten noch nach oben begrenzt. Die Bestellung mit Abonnementscharakter kann eine ganze Klasse von Tickets umfassen, z. B. Eintrittskarten für alle Vorstellungen in einem bestimmten Kino, für alle Fussballspiele in einem bestimmten Stadion oder für Netzkarten verschiedener Transportunternehmen.

Die Abrechnung kann auf verschiedene Weise erfolgen: Jeder Bezug kann einzeln abgerechnet werden oder jeweils eine bestimmte Anzahl Bezüge werden im Voraus oder im Nachhinein verrechnet. Der Zeitraum, in welchem eine solche Vorbestellung gültig ist, kann vom Betreiber der Einrichtung oder vom Benutzer gewählt werden. Er kann auch unbeschränkt sein, da der Benutzer die Möglichkeit hat, die permanente Vorbestellung aus der zentralen Bestellungsdatenbank zu löschen, insbesondere mit denselben Mitteln wie zum Erfassen einer Bestellung.

### Kurze Beschreibung der Zeichnungen

Die zur Erläuterung des Ausführungsbeispiels verwendeten Zeichnungen zeigen:
- Fig. 1: Eine schematische Darstellung der erfindungsgemässen Einrichtung;
- Fig. 2: eine schematische Darstellung zur Erläuterung der Verfahrensabläufe und der ausgetauschten Informationen;
- Fig. 3: eine Variante zu Fig. 2.

Grundsätzlich sind in den Figuren gleiche Teile mit gleichen Bezugszeichen versehen.

### Wege zur Ausführung der Erfindung

Das Verfahren und die Einrichtung mit Ausgabeautomaten für den Vorverkauf und Ausgabe von vorbestellten Eintritts- oder Parkkarten, Flug- und Fahrscheinen sind in Figur 1 dargestellt.

Die Einrichtung besteht aus mehreren Komponenten, die auf mehrere Standorte verteilt sein können.

Ein Telefon 2 in einem Büro 1 (oder einem Haus oder einem Auto), ein Mobiltelefon oder ein öffentlicher Fernsprecher dienen zur Bestellung der gewünschten Leistung durch den Benutzer.

Über das öffentliche Telefonnetz 3 erfolgt die Bestellung an eine Bestellungsannahmestelle 8. Die in beliebiger Sprache, Dialekt und Reihenfolge platzierte Bestellung wird am Telefon 4 der Bestellungsannahmestelle 8 aufgenommen und mittels der Tastatur 6 am Terminal 5 EDV-konform eingegeben. Die Korrektheit der Eingabe wird am Bildschirm 7 überprüft.

Über die Datenleitung 9 werden die Bestellungsangaben an die zentrale elektronische Datenverarbeitungsanlage (EDV) 10 übermittelt. Die zentrale EDV 10 beinhaltet Rechner mit mehreren Speichern, welche Software und Datenbanken zur Aufnahme und Verwaltung von Bestellungen (Bestellungsdatenbahk 11) und Debitoren (Debitorendatenbank 12) führen.

Über die Datenleitung 13 werden die Anfragen an die EDV-Anlage eines Leistungsanbieters 15 (z.B. Bahn) gerichtet. Spezifisch angesprochen werden Datenbanken 17 betreffend Leistungsplan (z.B. Fahrplan), gültige Tarife, Reservationen sowie die Datenbank 18 des Leistungsanbieters betreffend Kundenkarte (z.B. Bahnkarte einer Bahngesellschaft). Die zentrale EDV 10 kann mit EDV-Anlagen mehrerer Leistungsanbieter verbunden sein, so dass eine Vielzahl von unterschiedlichen Tickets reserviert und die Bestellungen und die Debitoren in den Datenbanken 11, 12 abgelegt werden können.

Über die im System zugelassenen Drittanbieterkarten (z.B. Kreditkarten) wird über den Gateway 14 des Leistungsanbieters und die Datenleitung 16 beim entsprechenden Clearing-Institut 31 für Drittanbieterkarten eine Auskunft eingeholt.

Die am Eintritt 19 (z.B. Bahnhof, Bahnsteig, Terminal eines Flughafens, Kinoeingang etc.) oder direkt im Zug, Bus etc. platzierten Ausgabeautomaten 20 dienen ausschliesslich der Ausgabe der vorbestellten Tickets, also z. B. der Eintrittskarten, Parkkarten, Flug- oder Fahrscheine.

Die Ausgabeautomaten 20 sind optimiert zur schnellstmöglichen Ausgabe der entsprechenden Tickets.

Der Benutzer identifiziert sich mittels einer durch den Leistungsanbieter oder Drittanbieter ausgegebenen und in den Kartenleser 24 eingeschobenen Karte 25. Die Steuerung 21 fragt nach dem Vorhandensein einer Bestellung bei der zentralen EDV 10 durch das Datennetz 30 und die EDV-Anlage 15 des Leistungsanbieters. Das Datennetz 30 wird über das Telefonnetz, ein Mobilfunknetz oder andere drahtgebundene oder drahtlose Kommunikationskanäle realisiert. Der Ausgabeautomat 20 muss - zumindest während der Transaktion - mit der zentralen EDV 10 im Online-Betrieb verbunden sein. Falls der Ausgabeautomat 20 wenig frequentiert ist und der Verbindungsaufbau nur eine kurze Zeit in Anspruch nimmt, z. B. nicht länger, als die Zeit, welche zur Erfassung der eingeschobenen Karte 25 durch den Kartenleser 24 erforderlich ist, kann vorgesehen werden, dass nur während Transaktionen eine Online-Verbindung aufgebaut wird. Der Einschub der Karte 25 in den Kartenleser 24 löst in diesem Fall automatisch den Verbindungsaufbau aus.

Bei mehreren Vorbestellungen werden einzelne Buchungen an der Kundenanzeige 22 angezeigt. Die Reihenfolge der angezeigten Buchungen wird aufgrund der aktuellen Zeit sowie des Standorts des Ticketausgabeautomaten 20 bestimmt, indem die zentrale EDV 10 jede Vorbestellung anhand dieser Parameter bewertet und sie in eine Rangliste ordnet, so dass die wahrscheinlichste Buchung zuerst bzw. zuoberst erscheint. Für einen auf einem Bahnsteig aufgestellten Automaten 20 liefert die Bewertungsfunktion z. B. generell einen hohen Wert für eine Vorbestellung, die eine Fahrkarte für einen Zug betrifft, der in Kürze vom betreffenden Bahnsteig abfahren wird. Für einen Automaten 20, der Kinokarten ausgibt, werden primär Buchungen für die nächste Vorstellung angezeigt.

Die Auswahl und die Reihenfolge der angezeigten Buchungen kann schliesslich auch durch die Gewohnheiten des Benutzers beeinflusst werden, indem die zentrale EDV Zugriff auf ein Benutzerprofil hat, in welchem die jeweiligen Bestellungen und die jeweiligen Bezüge am Automaten erfasst sind. Das System kann sich auf diese Weise an frühere Bezüge "erinnern" und die angezeigte Auswahl anpassen.

Einzelne Automaten können so eingestellt sein, dass sie nur Vorbestellungen eines gewissen Leistungsanbieters bzw. einer Gruppe von gewissen Leistungsanbietern ausgeben oder dass sie diese immer prioritär anzeigen. Ein Automat in einem Kino wird prioritär Kinotickets anzeigen (aber unter Umständen auch den Bezug anderer vorbestellter Tickets, z. B. von Fahrkarten, erlauben). Wenn mehrere Leistungsanbieter ähnlicher Dienstleistungen (z. B. verschiedene Transportunternehmen) an derselben erfindungsgemässen Einrichtung angeschlossen sind, also auf dieselbe Bestellungsdatenbank 11 zugreifen, kann z. B. derjenige Leistungsanbieter, welcher einen der Ticketausgabeautomaten 20 betreibt, seine Vorbestellungen prioritär gegenüber denjenigen für Leistungen von Konkurrenten anzeigen lassen.

Falls mehrere Buchungen an der Kundenanzeige 22 angezeigt werden, kann der Benutzer mittels einer OK-Taste 23 die gewünschte Buchung wählen. Dazu werden die einzelnen Buchungen nacheinander für eine gewisse Zeit (z. B. je 3 Sekunden) in der Kundenanzeige 22 hervorgehoben (durch eine farbige Unterlegung oder durch Fettdruck). Sobald die gewünschte Buchung an der Reihe ist, kann durch Druck auf die OK-Taste 23 die Ausgabe ausgelöst werden.

Falls nur eine Buchung angezeigt wird, kann mittels der OK-Taste 23 diese Buchung bestätigt werden.

Das Ticket 28 wird anschliessend vom Drucker 27 gedruckt und in die Ausgabeschale 29 geleitet.

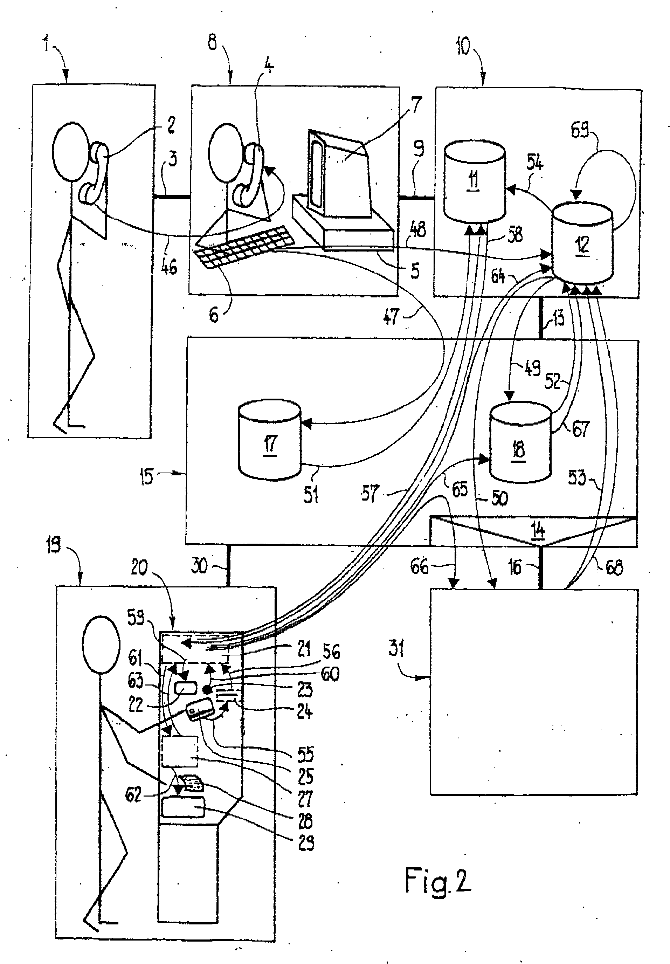

Das Verfahren von der Bestellung bis zur Abgabe der verkauften Eintritts- oder Parkkarten, Flug- oder Fahrscheine ist in Figur 2 dargestellt.

Dem erfindungsgemässen Verfahren liegt eine örtliche, systemmässige und zeitliche Trennung zwischen dem Wahlvorgang, der Ausgabe der Eintrittskarten, Flug- und/oder Fahrscheine und der Abrechnung zu Grunde.

Einzige Verbindung zwischen den drei Prozessen bildet die zentrale EDV 10.

Die einzelnen Verfahrensschritte sind nachfolgend beschrieben.

Der Wahlvorgang erfolgt mittels Telefon 2 in einem Büro 1 (in einem Haus, einem Auto oder mittels Mobiltelefon oder öffentlichen Fernsprecher) in einer ergonomisch optimalen Form der mündlichen Bestellung. In mehreren Sprachen und Dialekten werden die Angaben 46: *gewünschte Leistung, Datum, Preis, Ermässigung, Sonderwünsche sowie Nummer der zu belastenden Kundenkarte (z.B. Bahnkarte) oder Orittanbieterkarte (z.B, Kreditkarte)* vom Personal in der Bestellungsannahmestelle 8 über das öffentliche Telefonnetz 3 und das Telefon 4 aufgenommen. Die Eingaben werden mittels der Tastatur 6 des Terminals 5 EDV-konform eingegeben. Die Korrektheit der Eingabe wird am Bildschirm 7 überprüft. Mit den Angaben 47: *Leistung, Datum, Preis, Ermässigung und Sonderwünsche* werden durch die Datenleitungen 9, 13 und die zentrale EDV 10 in der EDV-Anlage 15 des Leistungserbringers die für die Erstellung der Eintrittskarte, Flug- und/oder Fahrkarte notwendigen Angaben geholt, z. B. der in der Datenbank 17 abgelegte Leistungsplan (z.B. Fahrplan) oder der Tarif.

Diese Angaben 51 für *ein oder mehrere Tickets* werden in der Datenbank für Bestellungen 11 abgelegt.

Gleichzeitig wird die Nummer der Kundenkarte oder Drittanbieterkarte 48 der Debitorendatenbank 12 zugeführt.

Über die Datenleitung 13 wird die Autorisierung der Kundenkarte (*Nummer der Kundenkarte* 49) durch die Datenbank 18 der Kundenkarten des Leistungsanbieters angefordert. Die Autorisierung einer im System zugelassenen Drittanbieterkarte (z.B. Kreditkarte) erfolgt mit Hilfe der *Nummer der Drittanbieterkarte* 50, die über den Gateway 14 des Leistungsanbieters und die Datenleitung 16 vom entsprechenden Clearing-Institut 31 für Drittanbieterkarten freigegeben wird. Die Autorisierung 52: *"Kundenkarte gültig"* resp. 53: *"Drittanbieterkarte gültig"* wird als Autorisierung 54: *"Karte gültig"* von der Debitorendatenbank 12 der in die Bestellungsddatenbank 11 abgelegt.

Die Ausgabe der Eintritts- oder Parkkarte, des Flug- und/oder Fahrscheins erfolgt direkt beim Leistungsanbieter oder vor der Beanspruchung der Leistung (z.B. beim Bahneintritt oder sogar im Zug) am einfachsten Ausgabeautomaten 20.

Der Benutzer identifiziert sich an einem beliebigen Ausgabeautomaten 20 durch Einschieben einer Kunden- oder Drittanbieterkarte 25 mit einer Identifikation 55 in den Kartenleser 24.

Der Kartenleser 24 übermittelt die *Nummer der Karte* 56 und gegebenenfalls den Standort bzw. eine Identifikation des Automaten an die Steuerung 21, welche über das Datennetz 30 und die Datenleitungen 16, 13 nach einer dieser *Nummer* 57 zugeordneten Bestellung in der Bestellungsdatei der Bestellungsdatenbank 11 fragt.

Die vorhandenen, dieser Nummer 57 zugeordneten und gegebenenfalls nach dem Standort bzw. der Identifikation des Automaten selektionierten und/oder geordneten Vorbestellungen 58 werden zu dem anfragenden Ausgabeautomaten 20 heruntergeladen,

Bei mehreren vorbestellten Tickets, werden diese standortabhängig in der optimalen Reihenfolge einzeln von der Steuerung 21 auf der Kundenanzeige 22 eingeblendet (*mehrere Tickets 59*)*.*

Mittels der OK Taste 23 wählt der Benutzer, welche Eintritts- oder Parkkarten, Flug-und/oder Fahrkarte *(Wahl* 60) er in diesem Vorgang abholen möchte.

In den meisten Fällen wird nur ein Ticket vorbestellt, wodurch keine *Wahl* 60 notwendig ist.

Anschliessend gibt die Steuerung 21 den Befehl *Drucker Start* 61 an den Drucker 27. Die *Ticketausgabe 62* der Eintrittskarte 28, des Flug-und/oder Fahrscheins erfolgt in der Ausgabeschale 29.

Der Drucker meldet *Ticket Ausgabe OK 63* an die Steuerung 21.

Damit ist der Ausgabevorgang abgeschlossen.

Die Abrechnung erfolgt ebenfalls separat und zeitlich getrennt von den vorhergehenden Vorgängen. Eine Bündelung zwecks Minimierung der Übertragungskosten ist wahlweise nach Absprache der beteiligten Partner möglich.

Nach fehlerfreier Ausgabe des Tickets 28, also der Eintritts- oder Parkkarte , des Flug-und/oder Fahrscheins und entsprechender Bestätigung *Ticket Ausgabe 0K* 63 übermittelt die Steuerung 21 die zur Abrechnung notwendigen Angaben an die zentrale EDV 10 und in einem nächsten Schritt an drei Orte, jeweils über das Datennetz 30 und die EDV-Anlage 15 des Leistungserbringers.

Zuerst übermittelt wird die *Nummer der zu belastenden Kundenkarte oder Drittanbieterkarte* 64 zusammen mit dem *Betrag* an die Debitorendatenbank 12 und Verwaltungssoftware der zentralen EDV 10.

Im nächsten Schritt wird die *Nummer der zu belastenden Kundenkarte* 65 an die Datenbank 18 der Kundenkarten-Verwaltung des Leistungsanbieters bzw. die *Nummer der zu belastenden Drittanbieterkarte* 66 durch den Gateway 14 und die Datenleitung 16 an das Clearing-Institut 31 der Drittanbieterkarten übermittelt. Darauf folgen die *Kundenkarten-Vergütung* 67 bzw. die *Drittanbieterkarten-Vergütung* 68 an die Debitorendatenbank 12 der zentralen EDV 10.

Vorbestellt werden können übliche einfache Tickets, welche z. B. zu einer Fahrt mit einem Verkehrsmittel oder zum einmaligen Besuch einer Veranstaltung Gültigkeit haben, und Abonnements, welche z. B. für mehrere Fahrten oder Veranstaltungen gültig bleiben. Es ist aber auch möglich, mehrere Tickets derselben Art (z. B. für dieselbe Fahrstrecke) in einem einzigen Vorgang vorzubestellen. Der Benutzer kann in diesem Fall vor Antritt einer Fahrt auf dieser Fahrstrecke jeweils in sehr kurzer Zeit ein (vorbestelltes) Ticket am Automaten beziehen. Falls der Benutzer z. B. einen Automaten direkt am Bahnsteig benutzt, wird dank einer prioritären Darstellung bevorzugter Buchungen in der Regel das Ticket für die gewünschte Strecke zuerst angezeigt und der Bezug des Tickets dauert nicht länger als z. B. die Entwertung einer üblichen Karte, welche zu einer gewissen Anzahl Fahrten berechtigt.

Die Anzahl vorbestellter Tickets muss aber beim erfindungsgemässen Verfahren nicht limitiert sein: So kann ein Benutzer, der z. B. oft dieselbe Strecke fährt, eine Vorbestellung mit Abonnementscharakter tätigen, indem er eine unbestimmte Anzahl entsprechender Tikkets vorbestellt. Die Vorbestellung verbleibt in der Folge in der Bestellungsdatenbank 11 bis zu einem allfälligen Widerruf durch den Benutzer oder bis zum Ablauf einer vorbestimmten zeitlichen Frist. Jeder Automat, welcher entsprechende Tickets ausgeben kann, wird also diese Vorbestellung mit Abonnementscharakter anzeigen und den Bezug eines entsprechenden Tickets ermöglichen. Die Vorbestellung mit Abonnementscharakter kann eine ganze Klasse von Tickets umfassen. In diesem Fall generiert der Ticketausgabeautomat 20 die angezeigten, anwählbaren Tickets wiederum aufgrund seines Standorts, der Uhrzeit und gegebenenfalls der Gewohnheiten des Benutzers.

Optional können vom Ticketausgabeautomaten 20 zusätzlich Informationen über den Zeitpunkt des Bezugs und den Ort des Automaten an die zentrale EDV 10 übermittelt werden. Die nachfolgende Abrechnung wird dann abhängig von diesen Parametern angepasst. So kann z. B. abhängig vom Zeitpunkt oder dem Ort des Bezugs ein unterschiedlicher Tarif angewendet werden. Die Vorbestellung kann z. B. zu einem bestimmten Zeitpunkt "verfallen": Wird sie früh abgeholt kommt ein niedriger Tarif zur Anwendung, bei später Abholung ein höherer. Nach dem Verfall wird die Vorbestellung automatisch in der Bestellungsdatenbank 11 gelöscht. Ebenfalls möglich sind Karten, die bis zu einem bestimmten Zeitpunkt hin gültig sind. Mit der laufenden Verkürzung der Gültigkeitsdauer wird dann auch ihr Preis nach unten angepasst. Schliesslich sind Fahrkarten möglich, für die lediglich der Zielort vorbestimmt ist: in diesem Fall kommt je nach Distanz des Ausgabeorts zum vorbestimmten Zielort ein unterschiedlicher Tarif zur Anwendung.

Die Abrechnung mit dem Benutzer werden die einzelnen Leistungsanbieter für ihre Kundenkarten und die Drittanbieter direkt und ohne Beteiligung der zentralen EDV 10 durchführen.

Eine weitere Variante sieht vor, dass sich der Benutzer entweder durch eine spezielle Identifikationskarte des Systems oder eine andere Karte identifiziert, und die Abrechnung durch das System, d. h. von der zentralen EDV 10, direkt mit dem Benutzer durchgeführt wird. Dies kann getrennt für jeden Leistungsanbieter oder gemeinsam für alle oder eine Gruppe von Leistungsambietern erfolgen. Die Funktionen der EDV-Anlage des Leistungsanbieters 15 werden in diesem Fall von der zentralen EDV 10 des Systems mit übernommen.

Im letzten und periodisch wiederholten Schritt wird die *periodische Debitaren-Kontrolle 69* bei der zentralen EDV 10 zwecks Aufdeckung von Unregelmässigkeiten durchgeführt.

Dadurch, dass die Abrechnung erst nach dem Bezug des Tickets erfolgt, entsteht dem Benutzer durch die Tätigung der Vorbestellung kein Risiko. Falls er das Ticket nicht benötigt und also nicht am Ticketausgabeautomaten bezieht, wird es ihm nicht in Rechnung gestellt. Die Vorbestellung kann entweder automatisch (nach einer gewissen Frist) oder durch den Benutzer selbst aus der Bestellungsdatertbank 11 gelöscht werden. Um in gewissen Fällen, z. B. bei der Vorbestellung von Tickets für bestimmte Musik- oder Sportanlässe oder für eine bestimmte Kinovorstellung, eine grosse Zahl von (vorsorglichen) Vorbestellungen zu verhindern, welche in der Folge nicht abgeholt werden, kann die Abrechnung bei bestimmten Tickets auch bereits bei der Vorbestellung oder automatisch nach einer gewissen Frist erfolgen. Aus demselben Grund kann die Löschung (oder Umbuchung) einer Vorbestellung in gewissen Fällen mit einer Gebühr verbunden werden.

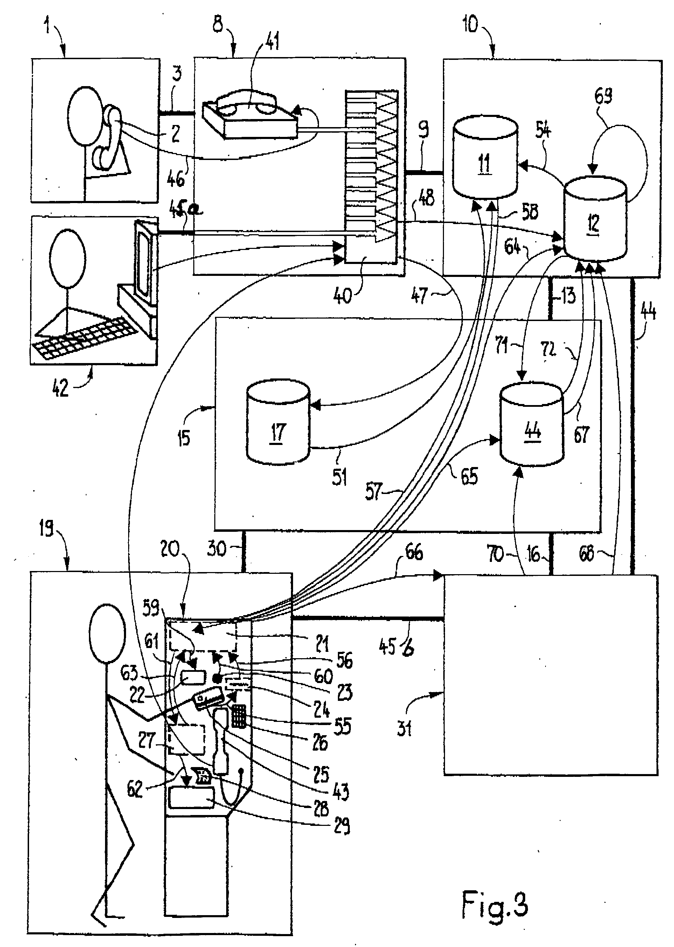

Die erfindungsgemässe Einrichtung kann in mehreren Bereichen optional, wie in Figur 3 dargestellt, ausgebaut werden.

Die Bestellungsannahmestelle 8 kann weitestgehend automatisiert werden. Der Aufbau eines Interfaces 40 zu alternativen Bestellungsannahmemedien spielt dabei eine wesentliche Rolle.

Das zur Bestellungsannahme eingesetzte Personal kann durch automatische Spracherkennung und Bearbeitung mittels Telefonautomat 41 ersetzt werden. Die Bestellung kann ebenfalls per Telekopie (Telefax) erfolgen, indem die Fax-Eingänge entweder von Personal oder automatisch (Schrifterkennung) weiter verarbeitet werden.

Die Bestellungen können auch von den bei den Benutzern vorhandenen Kunden-EDV-Anlagen 42 (z.B. PCs, Mobiltelefone) direkt via Datennetz 45a (z. B. das Internet, Kurzmitteilungsdienst des Telekommunikationsanbieters) und einem entsprechenden Interface 40 in die zentrale EDV 10 eingegeben werden. Es ist besonders vorteilhaft, wenn der Bestellvorgang in eine bestehende Anwendung des Anbieters integriert ist, z. B. in einen Fahr- oder Flugplan, einen Veranstaltungskalender oder einen Reservationsdienst, auf welchen online über das Internet zugegriffen werden kann. Bei dieser Realisierung wird ermöglicht, dass zu den ohnehin angezeigten Bahn- bzw. Flugverbindungen, Veranstaltungen etc. jeweils ein Schaltelement (z. B. eine Schaltfläche) zugeordnet ist, welche ohne nennenswerten Zusatzaufwand, allein durch Betätigung des Schaltelements die Bestellung eines Tickets für die angezeigte Verbindung oder Veranstaltung erlaubt.

Für Buchungen in letzter Sekunde können die Ausgabeautomaten 20 mit einem integrierten Telefon 43 am Ausgabeautomat zur direkten Verbindung mit dem Telefonautomat 41 erweitert werden. Weitere Optionen betreffen die Autorisierung und die Abrechnungswege.

Die Benutzerschnittstelle kann bei Ausgabeautomaten, die eine Vielzahl von Tickets ausgeben können, so dass kompliziertere Auswahlvorgänge zu erwarten sind, zusätzliche Bedienungselemente umfassen, insbesondere zur schnellen Auswahl von Vorbestellungen oder zum Widerrufen einer Auswahl. Diese Bedienungselemente können also z. B. Pfeiltasten zum Bewegen eines Cursors in einer Liste von Vorbestellungen und/oder eine Korrekturtaste umfassen. Alternativ dazu können diese Funktionen durch einen Trackball oder Joystick gesteuert sein. Besonders vorteilhaft ist eine berührungsempfindliche Anzeige (Touchscreen), so dass eine Vorbestellung durch Fingerdruck auf die entsprechende Anzeige ausgewählt werden kann.

Für den Fall, dass vom Leistungsanbieter oder Drittanbieter eine Online-Autorisierung der Kunden- oder Drittanbieterkarte erforderlich wäre, wird optional der entsprechende PIN-Code mittels einer optionalen PIN-Tastatur 26 eingegeben.

Eine Ausführungsform des erfindungsgemässen Ausgabeautomaten 20 bietet dem Benutzer die Möglichkeit, sich mittels eines Mobiltelefons gegenüber dem Ausgabeautomaten 20 zu identifizieren. Dazu ruft der Benutzer eine am Automaten angegebene Rufnummer an oder sendet z. B. eine Textmitteilung (SMS) an eine angegebene Rufnummer. Die zentrale EDV 10 oder eine spezielle Zentrale zur Verarbeitung der Anrufe nimmt den Anruf entgegen. Der Benutzer wird durch seine Rufnummer identifiziert, welche bei einem Anruf automatisch übermittelt wird.

Der Automat kann auf verschiedene Weise identifiziert werden: Jedem Automaten ist eine eigene Rufnummer zugeordnet, der Benutzer übermittelt in der Textmitteilung eine am Automaten angegebene Identifikationsnummer, oder die Zelle des Mobilfunknetzes, in welcher der Benutzer den Anruf ausführt, dient zur Identifikation. Die Möglichkeiten lassen sich kombinieren: So kann z. B. jeweils jedem Automaten in einer Zelle des Mobilfunknetzes eine eigene Nummer zugewiesen werden. In anderen, örtlich entfernten Zellen können dieselben Rufnummern abermals verwendet werden. Die Kommunikation mit der zentralen EDV 10 bzw. der speziellen Zentrale zur Verarbeitung der Anrufe kann vom Mobiltelefon aus auch über ein Datennetz, wie das Internet, erfolgen. Dazu wird z. B. das Wireless Application Protocol (WAP) eingesetzt, welches auch die Möglichkeit bietet, in verschiedenen Zellen verschiedene Inhalte anzubieten.

Besonders wenn das Mobiltelefon zur Identifikation eingesetzt wird, kann es auch die Aufgabe der Benutzerschnittstelle wahrnehmen. Dazu werden die vorhandenen, an den Ausgabeautomaten 20 übermittelten Vorbestellungen 58 auch zum Mobiltelefon übermittelt, insbesondere durch eine Textmitteilung oder über ein Datennetz (z. B. das Internet mittels WAP). Auf der Anzeige des Mobiltelefons werden sodann die Vorbestellungen 58, gegebenenfalls nach dem Standort bzw. der Identifikation des Automaten selektioniert und/oder geordnet, dargestellt. Mittels der Bedienungselemente des Mobiltelefons (durch Anwählen einer angezeigten Vorbestellung oder durch Senden einer entsprechenden Textmitteilung) wird eine Vorbestellung ausgewählt und bestätigt. Diese Auswahl und die Bestätigung werden zum Ausgabeautomaten 20 übermittelt, worauf dieser das gewünschte Ticket ausdruckt und ausgibt.

Ein erfindungsgemässer Ausgabeautomat 20 kann sowohl die Möglichkeit der Identifizierung und/oder Auswahl der Vorbestellungen am Automaten und über das Mobiltelefon bieten, er kann aber auch nur eine der Möglichkeiten erlauben. Falls der Automat lediglich mit einem Mobiltelefon bedient werden kann, erübrigen sich die Kundenanzeige 22, die OK-Taste 23 und der Kartenleser 24. Es ist in diesem Fall auch nicht erforderlich, sämtliche Vorbestellungen 58 zum Automaten zu übertragen. Erst nach der Auswahl und der Bestätigung einer Vorbestellung muss die Übertragung dieser einen ausgewählten Vorbestellung zum Automaten erfolgen.

Wahlweise kann der Ausgabeautomat 20 - an Stelle der zentralen EDV 10 - selbst Mittel zur Annahme von Anrufen bzw. Textmitteilungen umfassen, also z. B. einen GSM-Empfänger. Das erfindungsgemässe Verfahren läuft in diesem Fall gleich ab, wie wenn z. B. ein Kartenleser zur ldentifikation eingesetzt wird.

Der Ausgabeautomat 20 kann ebenfalls Mittel zum Empfang von Signalen eines berührungslosen Signalgebers aufweisen. Ein solcher Signalgeber, der z. B. in einer Armbanduhr integriert ist, übertragt eine den Benutzer eindeutig identifizierende Kennung über eine Funk- oder Infrarotverbindung, oder mittels Induktion direkt zum Empfänger, der im Ticketausgabeautomaten integriert ist. Das Einschieben einer Karte oder die Anwahl einer Telefonnummer erübrigt sich. Dadurch, dass der Signalgeber nur eine beschränkte Reichweite besitzt, kann sich nur der Benutzer identifizieren, der sich direkt beim Ausgabeautomaten 20 befindet.

Grundsätzlich kann zwischen der zentralen EDV 10 und dem Clearing-Institut 31 für Drittanbieterkarten eine direkte Datennetzverbindung 44 und auch zwischen den Ausgabeautomaten 20 und dem Clearing Institut 31 eine direkte Verbindung via Datennetz 45b bestehen. In diesem Fall wird die *Nummer der Drittanbieterkarte* 71 über die Datennetzverbindung 44 und die Datenleitung 16 an das Clearing-Institut 31 übermittelt, worauf dieses die Autorisierung 70 der Drittanbieterkarte über das Datennetz 44 als Autorisierung 72: *Karte gültig* an die Debitorendatenbank 12 zurückmeldet.

Zusammenfassend ist festzustellen, dass die erfindungsgemässe Einrichtung und das erfindungsgemässe Verfahren zum Vorverkauf und zur Ausgabe von Tickets mittels Automaten sehr einfach zu bedienen sind und eine Ausgabe der Tickets innert kürzester Zeit erlauben.

## Patentansprüche

1. Einrichtung mit einer zentralen elektronischen Datenverarbeitungsanlage (10), in welcher eine zentrale Bestellungsdatenbank (11) enthalten ist, und mit mindestens einem Ticketausgabeautomaten (20), der einen Drucker (27) hat und der mit der zentralen elektronischen Datenverarbeitungsanlage (10) zwecks einem von einem Bestellvorgang und einem Abrechnungsvorgang örtlich und zeitlich getrennten Bezug des Tickets im Online-Betrieb verbunden ist, wobei die Einrichtung Mittel zum Erfassen einer Benutzeridentifikation (24) aufweist, **dadurch gekennzeichnet, dass** der Ticket-ausgabeautomat (20) so gesteuert ist, dass alleine aufgrund der erfassten Benutzeridentifikation die in der zentralen Bestellungsdatenbank (11) zur Benutzeridentifikation vorhandenen Vorbestellungen an den Ticketausgabeautomaten (20) übermittelt und dort angezeigt werden, und dass der Benutzer durch Betätigen eines Bedienungselements (23) die gewünschte Vorbestellung auswählen und/oder bestätigen kann, wonach das Ticket (28) ausgedruckt wird.

2. Einrichtung nach Anspruch 1, **dadurch gekennzeichnet, dass** der Ticketausgabeautomat als Mittel zum Erfassen der Benutzeridentifikation einen Kartenleser aufweist.

3. Einrichtung nach Anspruch 1 oder 2, **dadurch gekennzeichnet, dass** sich der Benutzer gegenüber den Mitteln zum Erfassen einer Benutzeridentifikation mittels eines Mobiltelefons identifizieren kann.

4. Einrichtung nach einem der Ansprüche 1 bis 3, **dadurch gekennzeichnet, dass** sich der Benutzer gegenüber den Mitteln zum Erfassen einer Benutzeridentifikation mittels eines berührungslosen Signalgebers identifizieren kann.

5. Einrichtung nach einem der Ansprüche 1 bis 4, **dadurch gekennzeichnet, dass** der Ticketausgabeautomat ausschliesslich zur Ausgabe von Vorbestellungen ausgebildet ist.

6. Einrichtung nach einem der Ansprüche 1 bis 5, **dadurch gekennzeichnet, dass** die Auswahl und/oder Reihenfolge der angezeigten Vorbestellungen durch eine Bezugszeit des Tickets oder durch einen Aufstellungsort des Ticketausgabeautomaten bestimmt wird.

7. Ticketausgabeautomat für eine Einrichtung nach Anspruch 1 mit
a) Mitteln (30, 13) für die Online-Verbindung mit einer zentralen elektronischen Datenverarbeitungsanlage (10),
b) Mitteln (24) zum Erfassen einer Benutzeridentifikation,
c) Mitteln (22) zum Anzeigen von Vorbestellungen allein aufgrund der erfassten Benutzeridentifikation,
d) einem Bedienungselement (23) zum Bestätigen und/oder Auswählen einer bestimmten Vorbestellung und
e) einem Drucker (27) zum Ausgeben des Tickets zur ausgewählten Vorbestellung.

8. Ticketausgabeautomat nach Anspruch 7, **dadurch gekennzeichnet, dass** er ausschliesslich zur Ausgabe von Vorbestellungen ausgebildet ist.

9. Ticketausgabeautomat nach Anspruch 7 oder 8, **dadurch gekennzeichnet, dass** er die Auswahl und/oder Reihenfolge der angezeigten Vorbestellungen durch eine Bezugszeit des Tickets und/oder durch einen Aufstellungsort des Ticketausgabeautomaten bestimmt.

10. Ticketausgabeautomat nach einem der Ansprüche 7 bis 9, **dadurch gekennzeichnet, dass** das Bedienungselement ausschliesslich eine OK-Taste für die Auswahl bzw. Bestätigung ist.

11. Verfahren zum Betrieb einer Einrichtung nach Anspruch 1 zur Erfassung von Bestellungen in einer zentralen Bestellungsdatenbank (11) und zur örtlich und zeitlich getrennten Ausgabe von Tickets mit folgenden Schritten:
a) Entgegennahme von Bestellungsdaten in einem Terminal (5) zu einer zentralen elektronischen Datenverarbeitungsanlage (10),
b) Abspeichern der Bestellungsdaten in der zentralen Bestellungsdatenbank (11),
c) - zu einem späteren Zeitpunkt - Entgegennahme einer Benutzeridentifikation an einem örtlich getrennten Ticketausgabeautomaten (20),
d) Übermitteln der Benutzeridentifikation an die zentrale Bestellungsdatenbank (11) bzw. an die zentrale elektronische Datenverarbeitungsanlage (10),
e) Übermitteln von zur Benutzeridentifikation vorhandenen Bestellungen an den Ticketausgabeautomaten (20),
f) Anzeigen der Bestellungen am Ticketausgabeautomaten (20),
g) Entgegennahme einer vom Benutzer getätigten Auswahl oder Bestätigung für eine Bestellung.
h) Ausdrucken eines Tickets zu der vom Benutzer ausgewählten Bestellung.

12. Verfahren nach Anspruch 11, **dadurch gekennzeichnet, dass** die Bestellungsdaten zusammen mit den Angaben zur Benutzeridentifikation (11) zentral abgelegt werden und von einem beliebigen Ticketausgabeautomaten allein aufgrund einer Identifikation im Online-Betrieb abgerufen werden können, sowie dass die Abrechnung nach Mitteilung der abgeschlossenen Ausgabe durch den Ticketausgabeautomaten (20) bei der zentralen EDV (10) und/oder der EDV-Anlage des Leistungsanbieters (15) und/oder dem Clearing-Institut (31) getrennt und ohne Auflagen erfolgt.

13. Verfahren nach Anspruch 11 oder 12, **dadurch gekennzeichnet, dass** die Auswahl und/oder Reihenfolge der angezeigten Bestellungen durch eine Bezugszeit des Tickets oder durch einen Aufstellungsort des Ticketausgabeautomaten bestimmt wird.

14. Verfahren nach einem der Ansprüche 11 bis 13, **dadurch gekennzeichnet, dass** die Bestellungsdaten eine Bestellung umfassen, die erst nach Ablauf einer vorbestimmten Frist oder nach einem Widerruf durch den Benutzer aus der zentralen Bestellungsdatenbank gelöscht wird.
